(19) **Europäisches Patentamt / European Patent Office / Office européen des brevets**

(11) **EP 4 195 526 A1**

(12) # EUROPEAN PATENT APPLICATION
published in accordance with Art. 153(4) EPC

(43) Date of publication:
**14.06.2023 Bulletin 2023/24**

(21) Application number: **21853557.3**

(22) Date of filing: **06.08.2021**

(51) International Patent Classification (IPC):
**H04B 7/06** (2006.01)  **H04L 5/00** (2006.01)
**H04L 27/26** (2006.01)  **H04B 17/309** (2015.01)
**H04W 24/10** (2009.01)

(52) Cooperative Patent Classification (CPC):
**H04B 7/06; H04B 17/309; H04L 5/00; H04L 27/26; H04W 24/10**

(86) International application number:
**PCT/KR2021/010436**

(87) International publication number:
**WO 2022/031122 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2020 KR 20200098743**
**14.06.2021 KR 20210076608**

(71) Applicant: **LG Electronics Inc.**
**Seoul 07336 (KR)**

(72) Inventors:
• **CHOI, Seunghwan**
**Seoul 06772 (KR)**
• **KIM, Seonwook**
**Seoul 06772 (KR)**
• **YANG, Suckchel**
**Seoul 06772 (KR)**
• **KIM, Jaehyung**
**Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **METHOD AND DEVICE FOR TRANSMITTING AND RECEIVING SIGNALS IN WIRELESS COMMUNICATION SYSTEM**

(57)  According to one embodiment of the present invention, a method and device for transmitting and receiving a signal in a wireless communication system comprise the steps of: receiving a physical downlink control channel (PDCCH) for triggering a channel state information (CSI) report; on the basis of the PDCCH, receiving a CSI-reference signal (CSI-RS); and on the basis of a measurement result for the CSI-RS, transmitting a PUSCH including the CSI report. A first subcarrier spacing (SCS) is applied to the PDCCH, a second SCS is applied to the CSI-RS, a third SCS is applied to the PUSCH, and a section in which a CSI processing unit (CPU) is occupied by the CSI report may be determined on the basis of a reference SCS.

[Fig. 4]

receiving a PDCCH for triggering CSI report —— S401

receiving a CSI-RS based on the PDCCH —— S403

based on a measurement result for the CSI-RS, transmitting a PUSCH including the CSI report —— S405

**Description**

[Technical Field]

The present disclosure relates to a method and apparatus for use in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

[Disclosure]

[Technical Problem]

An object of the present disclosure is to provide a method and device for transmitting and receiving a signal to efficiently transmit a channel status report in a wireless communication system.
It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solutions]

The present disclosure provides a method and device for transmitting and receiving a signal in a wireless communication system.
In accordance with an aspect of the present disclosure, a method for transmitting and receiving a signal by a user equipment (UE) in a wireless communication system may include: receiving a physical downlink control channel (PDCCH) for triggering a channel state information (CSI) report; receiving a CSI-reference signal (CSI-RS) based on the PDCCH; and transmitting a PUSCH including the CSI report, based on a measurement result of the CSI-RS, wherein a first subcarrier spacing (SCS) is applied to the PDCCH, a second SCS is applied to the CSI-RS, and a third SCS is applied to the PUSCH, and a section in which a CSI processing unit (CPU) is occupied by the CSI report is determined based on a reference SCS.
In accordance with another aspect of the present disclosure, a device, a processor, and a storage medium for performing the method for transmitting and receiving a signal are provided.
In the methods and devices, the reference SCS may be determined to be a higher SCS value from among a lower bound SCS value and the smallest SCS value among the first SCS, the second SCS and the third SCS.
In the methods and devices, the period in which the CPU is occupied may be determined based on an offset configured on a symbol basis.
In the methods and devices, the method may further include: comparing priority of the CSI report with priority of the second CSI report based on triggering of the second CSI report before transmission of the PUSCH after reception of the PDCCH; occupying the CPU by the second CSI report, based on a state in which priority of the second CSI report is higher than priority of the CSI report; and occupying the CPU by the CSI report, based on a state in which priority of the CSI report is higher than priority of the second CSI report so that the CPU is occupied by the CSI report.
In the methods and devices, a time limit for measuring the CSI-RS may be configured, wherein the time limit is configured as a plurality of slots.
The devices may include at least a UE, a network, and an autonomous vehicle capable of communicating with other autonomous vehicles other than the device.
The above-described aspects of the present disclosure are only some of the preferred embodiments of the present disclosure, and various embodiments reflecting the technical features of the present disclosure may be derived and understood from the following detailed description of the present disclosure by those skilled in the art.

[Advantageous Effects]

As is apparent from the above description, when channel status information is transmitted and received between communication devices, the embodiments of the present disclosure have advantages in that transmission of an uplink (UL) channel can be performed more efficiently through an operation differentiated from the conventional art.

The technical effects of the present disclosure are not limited to the above-mentioned technical effects, and other technical effects can be inferred from the embodiments of the present disclosure.

[Description of Drawings]

FIG. 1 illustrates a radio frame structure.
FIG. 2 illustrates a resource grid during the duration of a slot.
FIG. 3 illustrates a self-contained slot structure.
FIG. 4 is a flowchart according to an embodiment of the present disclosure.
FIGS. 5 to 8 show an example of apparatuses according to an embodiment of the present disclosure.

[Best Mode]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

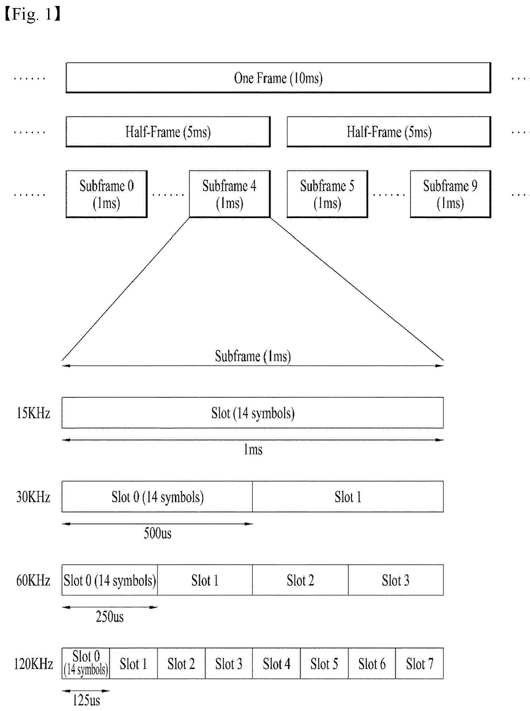

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30kHz or 60kHz, a dense urban area, a lower latency, and a wide carrier bandwidth may be supported. With an SCS of 60kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

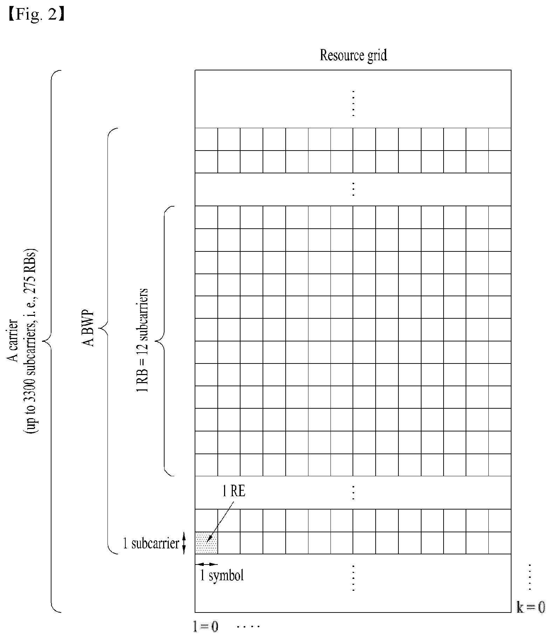

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio

EP 4 195 526 A1

link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

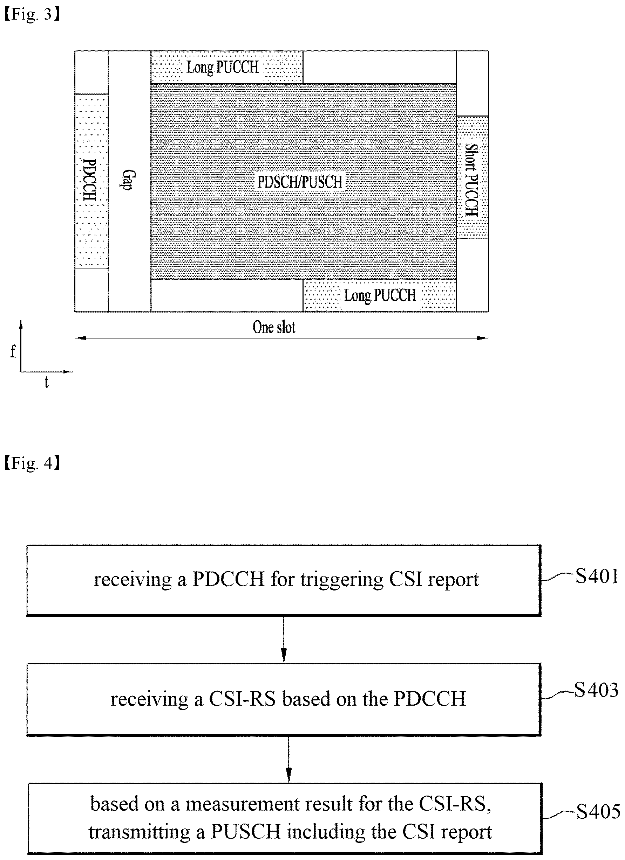

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### 1. CSI transmission in a system in which a plurality of numerologies is used

The contents of the foregoing can be applied in combination with the methods proposed in the present disclosure, which will be described later, or can be supplemented to clarify the technical characteristics of the methods proposed in the present disclosure.

In addition, the methods to be described later can be equally applied to the NR system (licensed band) or shared spectrum described above, and can be modified or replaced according to terms, expressions, structures, and the like defined in each system so that the technical ideas proposed in the present disclosure can be implemented in the corresponding system.

As described above, in the NR system, OFDM(A) numerology (e.g., SCS, CP length, etc.) may be set differently between a plurality of cells merged into one user equipment (UE). The maximum operating bandwidth of the UE may be determined differently according to the SCS. In the NR system operating at 52.6 GHz or less, SCSs of 60 kHz and 120 kHz may be used for the NR system. The maximum operating bandwidth is defined as 400 MHz.

A frequency band higher than FR1 and FR2 bands (e.g., 52.6 GHz to 114.25 GHz band, particularly 52.6 GHz to 71 GHz) may be referred to as FR3. Waveforms, SCS, CP length, timing, etc. defined for FR1 and FR2 in the existing NR system may not be applied to FR3.

According to the conventional NR system, the highest SCS value defined for use in FR2 is 240 kHz. If 240 kHz SCS is used in the FR3 band, there may not occur a problem in a specific signal/channel (e.g., SS block), but phase noise may occur in other specific signals/channels (e.g., CORESET#0 and subsequent signals/channels, etc.) (phase noise). In order to solve this problem, a larger SCS JT (e.g., 480 kHz SCS, 960 kHz SCS, etc.) may be needed.

In the larger SCS, the OFDM symbol length and the slot length can be shortened.

Meanwhile, the NR system may provide a flexible framework for providing channel state information (CSI) to the network. The purpose of the CSI framework is to measure a DL channel and provide the measured DL channel to the network, and may include a process of setting a reference signal for CSI measurement and a reporting procedure related thereto. For flexible CSI related setting for NR, CSI measurement, CSI reporting, and CSI reference signals can be established independently. Due to support for such great flexibility, UE implementation may become complicated.

In order to support various kinds of measurement/reporting while limiting the complexity of CSI calculation of the UE, a CSI operating unit may be defined as a CSI processing unit. CSI measurement/reporting that can be simultaneously processed by the UE using the CPU may be restricted. The maximum number of CPUs for each UE may be set to UE capability. CSI calculation/measurement/reporting that can be processed simultaneously may be limited to less than the reported maximum number of CPUs. Table 4 shows an example of CSI operation.

[Table 4]

- CSI processing criteria

The UE indicates the number of supported simultaneous CSI calculations $N_{CPU}$ with parameter *simultaneousCSI-ReportsPerCC* in a component carrier, and *simultaneousCSI-ReportsAllCC* across all component carriers. If a UE supports $N_{CPU}$ simultaneous CSI calculations it is said to have $N_{CPU}$ CSI processing units for processing CSI reports. If $L$ CPUs are occupied for calculation of CSI reports in a given OFDM symbol, the UE has $N_{CPU}$ - $L$ unoccupied CPUs. If $N$ CSI reports start occupying their respective CPUs on the same OFDM symbol on which $N_{CPU}$ - $L$ CPUs are unoccupied, where each CSI report $n$ = 0,..., $N$ - 1 corresponds to $O_{CPU}^{(n)}$ , the UE is not required to update the $N$ - M requested CSI reports with lowest priority, where $0 \leq M \leq N$ is the largest value such that $\sum_{n=0}^{M-1} O_{CPU}^{(n)} \leq N_{CPU} - L$ holds.

A UE is not expected to be configured with an aperiodic CSI trigger state containing more than $N_{CPU}$ Reporting Settings. Processing of a CSI report occupies a number of CPUs for a number of symbols as follows:

> - $O_{CPU}$ = 0 for a CSI report with CSI-ReportConfig with higher layer parameter *reportQuantity* set to 'none' and *CSI-RS-ResourceSet* with higher layer parameter *trs-Info* configured
>
> - $O_{CPU}$ = 1 for a CSI report with *CSI-ReportConfig* with higher layer parameter *reportQuantity* set to 'cri-RSRP', 'ssb-Index-RSRP', 'cri-SINR', 'ssb-Index-SINR' or 'none' (and *CSI-RS-ResourceSet* with higher layer parameter *trs-Info* not configured)
>
> - for a CSI report with *CSI-ReportConfig* with higher layer parameter *reportQuantity* set to 'cri-RI-PMI-CQI', 'cri-RI-il', 'cri-RI-il-CQI', 'cri-RI-CQI', or 'cri-RI-LI-PMI-CQI',
>> - if a CSI report is aperiodically triggered without transmitting a PUSCH with either transport block or HARQ-ACK or both when $L$ = 0 CPUs are occupied, where the CSI corresponds to a single CSI with wideband frequency-granularity and to at most 4 CSI-RS ports in a single resource without CRI report and where *codebookType* is set to 'type1-SinglePanel' or where *reportQuantity* is set to 'cri-RI-CQI', $O_{CPU} = N_{CPU}$,
>> - otherwise, $O_{CPU}$ = $K_s$, where $K_s$ is the number of CSI-RS resources in the CSI-RS resource set for channel measurement.

For a CSI report with *CSI-ReportConfig* with higher layer parameter *reportQuantity* not set to 'none', the CPU(s) are occupied for a number of OFDM symbols as follows:

> - A periodic or semi-persistent CSI report (excluding an initial semi-persistent CSI report on PUSCH after the PDCCH triggering the report) occupies CPU(s) from the first symbol of the earliest one of each CSI-RS/CSI-IM/SSB resource for channel or interference measurement, respective latest CSI-RS/CSI-IM/SSB occasion no later than the corresponding CSI reference resource, until the last symbol of the configured PUSCH/PUCCH carrying the report.
>
> - An aperiodic CSI report occupies CPU(s) from the first symbol after the PDCCH triggering the CSI report until the last symbol of the scheduled PUSCH carrying the report.
>
> - An initial semi-persistent CSI report on PUSCH after the PDCCH trigger occupies CPU(s) from the first symbol after the PDCCH until the last symbol of the scheduled PUSCH carrying the report.

For a CSI report with *CSI-ReportConfig* with higher layer parameter *reportQuantity* set to 'none' and *CSI-RS-ResourceSet* with higher layer parameter *trs-Info* not configured, the CPU(s) are occupied for a number of OFDM symbols as follows:

(continued)

| |
| --- |
| - CSI processing criteria |
|     - A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for LI-RSRP computation, until $Z_3'$ symbols after the last symbol of the latest one of the CSI-RS/SSB resource for channel measurement for LI-RSRP computation in each transmission occasion.<br>    - An aperiodic CSI report occupies CPU(s) from the first symbol after the PDCCH triggering the CSI report until the last symbol between $Z_3$ symbols after the first symbol after the PDCCH triggering the CSI report and $Z_3'$ symbols after the last symbol of the latest one of each CSI-RS/SSB resource for channel measurement for LI-RSRP computation. |
| where ( $Z_3, Z_3'$ ) are defined in the table 7.<br>In any slot, the UE is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. For semi-persistent CSI-RS, starting from the end of when the activation command is applied, and ending at the end of when the deactivation command is applied. For periodic CSI-RS, starting when the periodic CSI-RS is configured by higher layer signalling, and ending when the periodic CSI-RS configuration is released. If a CSI-RS resource is referred $N$ times by one or more CSI Reporting Settings, the CSI-RS resource and the CSI-RS ports within the CSI-RS resource are counted $N$ times. |

[Table 5]

| |
| --- |
| - UE CSI computation time |
| When the *CSI request* field on a DCI triggers a CSI report(s) on PUSCH, the UE shall provide a valid CSI report for the *n*-th triggered report,<br>    - if the first uplink symbol to carry the corresponding CSI report(s) including the effect of the timing advance, starts no earlier than at symbol $Z_{ref}$, and<br>    - if the first uplink symbol to carry the n-th CSI report including the effect of the timing advance, starts no earlier than at symbol $Z'_{ref}(n)$,<br>where $Z_{ref}$ is defined as the next uplink symbol with its CP starting $T_{proc,CSI} = (Z)(2048+144) \cdot \kappa 2^{-\mu} \cdot T_c + T_{switch}$ after the end of the last symbol of the PDCCH triggering the CSI report(s), and where $Z'_{ref}(n)$, is defined as the next uplink symbol with its CP starting $T_{proc,CSI} = (Z')(2048+144) \cdot k2^{-\mu} \cdot T_c$ after the end of the last symbol in time of the latest of: aperiodic CSI-RS resource for channel measurements, aperiodic CSI-IM used for interference measurements, and aperiodic NZP CSI-RS for interference measurement, when aperiodic CSI-RS is used for channel measurement for the *n*-th triggered CSI report, and where $T_{switch}$ equals to the switching gap duration and is applied only if $Z_1$ of table 5.4-1 is applied. |
| If the PUSCH indicated by the DCI is overlapping with another PUCCH or PUSCH, then the CSI report(s) are multiplexed following the procedure in clause 9.2.5 of [6, TS 38.213] and and clause 5.2.5 of [3GPP TS 38.214] when applicable, otherwise the CSI report(s) are transmitted on the PUSCH indicated by the DCI. |
| When the *CSI request* field on a DCI triggers a CSI report(s) on PUSCH, if the first uplink symbol to carry the corresponding CSI report(s) including the effect of the timing advance, starts earlier than at symbol $Z_{ref}$,<br>    - the UE may ignore the scheduling DCI if no HARQ-ACK or transport block is multiplexed on the PUSCH. |
| When the *CSI request* field on a DCI triggers a CSI report(s) on PUSCH, if the first uplink symbol to carry the n-th CSI report including the effect of the timing advance, starts earlier than at symbol $Z'_{ref}(n)$,<br>    - the UE may ignore the scheduling DCI if the number of triggered reports is one and no HARQ-ACK or transport block is multiplexed on the PUSCH |

(continued)

| - UE CSI computation time |
|---|

- Otherwise, the UE is not required to update the CSI for the n-th triggered CSI report.

$Z$, $Z$' and $\mu$ are defined as:
$$Z = \max_{m=0,\ldots,M-1}(Z(m))$$

and
$$Z' = \max_{m=0,\ldots,M-1}(Z'(m))$$
, where $M$ is the number of updated CSI report(s) according to Clause 5.2.1.6 of [3GPP TS 38.214], $(Z(m),Z'(m))$ corresponds to the m-th updated CSI report and is defined as

- ( $Z_1,Z_1'$ ) of the table 6 if the CSI is triggered without a PUSCH with either transport block or HARQ-ACK or both when $L = 0$ CPUs are occupied (according to Clause 5.2.1.6 of [3GPP TS 38.214]) and the CSI to be transmitted is a single CSI and corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or

- ( $Z_1,Z_1'$ ) of the table 7 if the CSI to be transmitted corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or

- ( $Z_1,Z_1'$ ) of the table 7 if the CSI to be transmitted corresponds to wideband frequency-granularity where the *reportQuantity* is set to 'ssb-Index-SINR', or *reportQuantity* is set to 'cri-SINR', or

- ( $Z_3,Z_3'$ ) of the table 7 if *reportQuantity* is set to 'cri-RSRP' or 'ssb-Index-RSRP', where $X\mu$ is according to UE reported capability *beamReportTiming* and $KB_l$ is according to UE reported capability *beamSwitchTiming* as defined in [3GPP TS 38.306], or

- ( $Z_2,Z_2'$ ) of table 7 otherwise.

- $\mu$ of table 6 and table 7 corresponds to the min ($\mu_{PDCCH}$, $\mu_{CSI\text{-}RS}$, $\mu_{UL}$) where the $\mu_{PDCCH}$ corresponds to the subcarrier spacing of the PDCCH with which the DCI was transmitted and $\mu_{UL}$ corresponds to the subcarrier spacing of the PUSCH with which the CSI report is to be transmitted and $\mu_{CSI\text{-}RS}$ corresponds to the minimum subcarrier spacing of the aperiodic CSI-RS triggered by the DCI

[Table 6]

| $\mu$ | $Z_1$ [symbols] | |
|---|---|---|
| | $Z_1$ | $Z'_1$ |
| 0 | 10 | 3 |
| 1 | 13 | 11 |
| 2 | 25 | 21 |
| 3 | 43 | 36 |

[Table 7]

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2 + KB_1)$ | $X_2$ |
| 3 | 97 | 85 | 152 | 140 | $\min(97, X_3 + KB_2)$ | $X_3$ |

As shown in Table 4, the time to use the CPU for specific CSI calculation, measurement and/or reporting is referred to as a CPU occupancy time, and a CPU already used during the occupancy time cannot be used for other CSI calculations. For example, when two CSI measurements/reports are configured for a UE capable of calculating one CSI at the same time, if another CSI calculation is requested before the CPU occupancy time of the preceding CSI ends, the UE may not perform the subsequent CSI calculation. On the other hand, referring to Table 5, a PDCCH for triggering CSI, a CSI-RS, and a PUSCH/PUCCH including CSI reporting may operate in different numerologies. In this case, the CSI-related timeline (for example, the number of slots or the number of symbols) may be set based on the smallest numerology. For example, when a plurality of numerologies is related to CSI measurement and reporting, a CSI timeline may be set based on the longest slot length (or symbol length). For this reason, when the plurality of numerologies is mixed, the use of the CPU of the following (or succeeding) CSI may be limited due to CPU occupation of the preceding CSI. In particular, if new numerology (e.g. SCS of 480 kHz or higher) and then existing numerology (e.g. SCS of 240 kHz or less) are related to one CSI measurement/report at the same time, CPU occupancy recognition and update may be very complicated and inefficient. On the other hand, when the time per symbol and/or slot is shortened due to the introduction of numerology, operations such as checking and updating the CPU occupancy and occupancy time in units of the same symbols/slots as the existing CSI framework may have a negative influence upon UE implementation.

The present disclosure proposes a method for setting a CPU occupancy related to CSI measurement and/or reporting and a timeline required for such CPU occupancy. Specifically, proposed are methods for setting (or configuring) the occupancy time, occupancy condition, etc. of the CPU used for CSI calculation, measurement and/or reporting in the above-described situation (for example, a situation in which the plurality of numerologies is used simultaneously and different symbol/slot lengths are mixed).

Method 1) A method for setting a reference numerology and controlling the CPU state and related operations in units of OFDM symbols corresponding to the reference numerology.

CPU used for CSI measurement and/or reporting may be set to a maximum number of CPUs that can be supported by the corresponding UE capability for each UE. The maximum number of CPUs may indicate the number of CSI measurements and/or reports that can be simultaneously processed by the corresponding UE. In addition, the occupancy time of the CPU used in the UE and the number of usable CPUs may be identified and updated in units of OFDM symbols. Meanwhile, for a specific numerology, a subcarrier spacing (SCS) value and the length of an OFDM symbol are inversely proportional. Therefore, in general, when the SCS is large, the OFDM symbol length is shortened. When the SCS is greater than a specific value, CPU occupancy time and the number of CPUs should be performed within a very short time, and high UE complexity may be required. In order to solve this problem, numerology, which is a reference for identifying the CPU occupation state, may be set or configured. The numerology, which is a reference for identifying the CPU occupation state, may be referred to as a reference numerology (ref-numerology) or a reference SCS (ref-SCS). The CPU occupation state can be identified based on the reference SCS. The reference SCS may be set to any one of three SCSs respectively applied to PDCCH triggering CSI, CSI-RS, and PUSCH/PUSCH including CSI reporting. In addition, the reference SCS may be set to a specific SCS other than the three SCSs respectively applied to the PDCCH triggering the CSI, the CSI-RS, and the PUSCH/PUCCH including the CSI reporting.

As a specific example, considering the case where the ref-SCS is set to 120 kHz for a UE operating at 960 kHz SCS, the CPU occupation status is identified and updated according to the symbol length corresponding to 120 kHz instead of 960 kHz, and the related CSI measurement and/or reporting may also be performed according to symbol time based on ref-SCS. In this case, the number of symbols on 960 kHz corresponding to a single symbol length based on 120 kHz SCS may be 8. If ref-SCS is not configured, CPU occupancy time may start from the start symbol of PDCCH (with 960 kHz SCS) triggering CSI-RS. On the other hand, when the ref-SCS is set to 120 kHz, regardless of which symbol is a starting point of the PDCCH among 8 symbols of 960 kHz corresponding to the 120 kHz SCS single symbol, the entire section corresponding to a single symbol of 120 kHz SCS may be included as a CPU occupancy time. The ref-numerology (or ref-SCS) value may be semi-statically configured by higher layer signaling such as RRC, or dynamically through PDCCH. For example, the ref-numerology (or ref-SCS) value may be configured semi-statically through RRC based on the operating band of the cell/carrier and/or the numerologies configured in the PDCCH/PUSCH. As another example, when a plurality of SCSs is configured in relation to CSI, the UE may dynamically configure the ref-numerology (or ref-SCS) value based on a difference (or ratio) between the configured SCSs. Meanwhile, the operation for configuring the timeline for CSI measurement/reporting using ref-numerology (or ref-SCS) may be semi-statically or dynamically turned on/off. For example, information as to whether to apply the ref-numerology through higher layer signaling such as RRC can be semi-statically enabled or disabled. Alternatively, whether to perform such enabling or disabling through a PDCCH (DCI) may be configured dynamically.

Method 2) A method for setting a lower bound to the minimum SCS value determining the CSI processing time, and controlling the CPU state and associated operation in units of OFDM symbols according to the reference SCS configured based on the lower bound.

When a plurality of numerologies (or SCSs) is set (or configured), the UE may operate in a manner of managing the CSI measurement/reporting operation and the CPU state based on the smallest value among the set (or configured) SCSs. That is, the operation related to CPU occupancy time may be based on the longest symbol length among a plurality of symbol lengths configured for a cell, carrier, and/or UE. In this case, since the entire CSI processing time is determined by the smallest SCS (or longest symbol duration) among the configured SCSs, a CPU occupancy time is relatively long, which may cause inefficient CPU usage. In order to solve this problem, a lower bound of the SCS for determining the timeline related to CSI processing is configured, and CSI measurement/reporting and CPU related operations may be performed based on the configured lower bound. In Method 2, it can be understood that the reference numerology (or reference SCS) of Method 1 is configured based on the lower bound.

In accordance with this embodiment related to the above description, in the CSI measurement and/or reporting operation in which a relatively large SCS (e.g., 960 kHz) and a small SCS (e.g., 120 kHz) are configured together, the lower bound SCS may be set to 240 kHz. If the CSI timeline is set based on the SCS to which the lower bound is applied, a relatively long processing time based on the SCS less than the SCS to which the lower bound is applied is not used. As a result, the effect of reducing overall CSI latency and CPU occupancy time can be expected. The lower bound of the SCS may be configured (or set) semi-statically by higher layer signaling such as RRC. Alternatively, the lower bound of the SCS may be dynamically configured (or set) in association with the maximum and minimum values of the SCS configured in the cell, carrier, and/or UE (e.g., when a difference between the maximum (max) value of the SCS and the minimum (min) value of the SCS is four times or more). For example, an SCS (SCS_lb) value to which the lower bound is applied may be configured by Equation 1 below.

[Equation 1]

$$SCS\_lb = Max\{\ min\{SCS\_trig,\ SCS\_sig,\ SCS\_ul\},\ SCS\_lb\_temp\ \}$$

In Equation 1, SCS_trig denotes an SCS configured in a PDCCH triggering a CSI report, SCS_sig denotes an SCS configured in the CSI-RS, and SCS_ul denotes an SCS configured in a UL PUSCH and/or PUCCH including the CSI report. SCS_lb_temp denotes a pre-defined SCS or a dynamically (or semi-statically) determined temporary SCS_lb. SCS_lb_temp may correspond to a configured lower bound value. The derived SCS_lb may be configured (or set) as the reference SCS of Method 1. Meanwhile, the operation for configuring (or setting) the lower bound value for the reference SCS and configuring the timeline of CSI measurement/reporting may be semi-statically or dynamically turned on/off. For example, information as to whether to apply the ref-numerology through higher layer signaling such as RRC can be semi-statically enabled or disabled. Alternatively, whether to perform such enabling or disabling through a PDCCH (DCI) may be configured dynamically.

Method 3) A method for controlling the CPU state and related operations by adding an offset to the CPU occupancy time

The CPU occupancy period can be flexibly adjusted by adding an offset at the start time and/or end time of the CPU occupancy period. In the existing NR operation, the start point of the CPU occupancy time may be configured based on a PDCCH triggering CSI measurement/report or a transmitted CSI-RS. The end point of the CPU occupancy time may be configured based on transmission of the PUSCH/PUCCH carrying the CSI report content. At this time, when a positive offset is additionally configured at the start point of the occupancy period or a negative offset is additionally configured at the end point of the occupancy period (or a separate offset is additionally configured at each of the start and end time points of the occupancy period), a CPU occupancy period may be reduced. In Method 3, when a difference between the SCS configured for the triggering PDCCH or CSI-RS and the SCS configured for the PUSCH or PUCCH exceeds a specific value, flexible CPU use can be expected by changing the CPU occupancy period. When a difference between an SCS configured in a triggering PDCCH or a CSI-RS and an SCS configured for a PUSCH or a PUCCH exceeds a specific value, a flexible CPU may be expected to be used by changing a CPU occupancy period. In addition, when Method 3 is used when PUSCH triggering lags behind a specific time point (at which CSI calculation completion of the UE is expected) by a specific value or more, the CPU occupancy due to preceding CSI calculation is terminated as quickly as possible, and an available CPU can be secured so that the CPU reserved for calculating the lagging (or following) CSI can be utilized. In Method 3, offsets to be added at the start and end times of the CPU occupancy period may be semi-statically configured by higher layer signaling such as RRC. Alternatively, the offset to be added at the start and end times of the CPU occupancy period may be dynamically configured based on the SCS configured in the cell, carrier, and/or UE, and the lagging (or following) PUSCH and/or PUCCH time point. For example, the end time of the CPU occupancy period may be configured after a predetermined number of symbols from the start time of the CPU occupancy period. The predetermined number of symbols may be configured in relation to Z and Z' defined in relation to the CPU occupancy period described in Tables 4 to 7. Meanwhile, the operation of applying the offset to the CPU occupancy time itself may be turned on/off. For example, the operation for applying the offset to the CPU occupancy time can be semi-statically enabled or disabled through higher layer signaling such as RRC. Alternatively, whether to perform such enabling or disabling can be dynamically configured through the PDCCH (DCI).

Method 4) A method for prioritizing CPU occupancy according to numerology and controlling the CPU state and related operations based on this priority

In a situation where a plurality of numerologies is configured, priorities may be given to the possibility of occupying the CPU for each numerology, and the CPU occupancy time can be controlled based on the given priority. In Method 4, it is possible to flexibly use the CPU by differentially setting the CPU occupancy possibility for each numerology in the UE without additional change in the operating method related to CSI processing for each numerology. In particular, when a relatively large SCS (e.g., 960 kHz) is configured, CSI measurement/calculation related to a relatively large SCS may be possible in a relatively short time (compared to the case of a small SCS), so that the CPU for related CSI processing is preferentially used and the remaining time is used for processing the CSI requiring a relatively long CPU occupancy time, resulting in improvement in CPU utilization. For example, a plurality of CSI measurement/reports set to 480 kHz SCS may exist in a TDM format within a CPU occupancy period for a specific CSI measurement/report configured with 15 kHz SCS. At this time, the UE (or network) determines the CPU occupancy priority by simultaneously considering one specific CSI process (corresponding to 15 kHz) and a plurality of CSI processes (corresponding to 480 kHz), so that the UE can select which CSI processing will be performed with priority. As another example, in a situation where CSI measurement/reporting set to 15kHz SCS has already occupied some CPUs, when CSI measurement/reporting corresponding to 480kHz SCS satisfies a specific condition (for example, if CSI measurement/report corresponding to 480 kHz SCS is able to occupy only less than three CPUs, or when CSI measurement/report corresponding to 960 kHz SCS can occupy only one CPU), the UE may release the existing CPU occupation and may occupy and operate the CPU for CSI processing with higher priority. In Method 4, the priority of CPU occupancy for each numerology may be semi-statically configured by higher layer signaling such as RRC. Alternatively, the priority of CPU occupancy for each numerology may be dynamically configured according to an SCS combination configured in a cell, carrier, and/or UE, or according to content to be reported by a specific CSI. The operation for applying priority to the CPU occupancy may be semi-statically or dynamically turned on or off. For example, the operation for applying priority to the CPU occupancy through higher layer signaling such as RRC may be semi-statically enabled or disabled. Alternatively, whether to perform such enabling or disabling may be dynamically set through the PDCCH (DCI).

Method 5) A method of setting (or configuring) time restriction (timeRestriction) of CSI measurement to a specific period, performing CSI measurement in units of the corresponding period, and reporting the time restriction

In association with CSI measurement, a time limit for channel measurement and interference measurement may be configured. In this case, CSI measurement may include channel measurement and/or interference measurement to be performed by the UE using SSB, CSI-RS, or CSI-IM. For example, when CSI measurement is configured periodically, the UE may measure the channel and interference using periodic CSI-RS and/or CSI-interference measurement (CSI-IM), may accumulate (or average) a plurality of measurement values for a long time (e.g., several slot times), and may report the CSI based on the resultant values. At this time, if the RRC parameter related to the time limit is configured, the CSI report for the channel/interference may be performed using only the CSI measurement value in a specific slot without accumulating/averaging a plurality of measurement values. A specific slot may be replaced with a reference signal of a specific moment (SSB, CSI-RS or CSI-IM occasion).

Specifically, a reference signal at a specific moment may be the most recently (or last) received reference signal at the time of performing CSI measurement. More specifically, the reference signal may be (1) SSB or NZP (non-zero power) CSI-RS to be used for channel measurement for L1-RSRP calculation, (2) SSB or NZP CSI-RS to be used for channel measurement for L1-SINR calculation, (3) CSI-IM or NZP CSI-RS to be used for channel measurement for L1-SINR calculation, (4) NZP CSI-RS to be used for channel measurement for CSI value calculation, and/or (5) CSI-IM or NZP CSI-RS to be used for channel measurement required for CSI value calculation. The time limit for channel measurement and/or interference measurement can be configured through timeRestrictionForChannelMeasurements and timeRestrictionForInterferenceMeasurements corresponding to RRC IE (Information Element).

On the other hand, when a large SCS (e.g., 480 kHz or 960 kHz) not defined in FR1/FR2 is configured as described above, the length of one symbol and the length of one slot are greatly reduced, the utility of a time restriction operation for performing CSI reporting by using only CSI measurement in one slot (or a specific slot or a specific occasion) may be reduced or UE implementation may become difficult. In order to address this issue, the time limit operation may be extended to a specific number of slots (or symbols or occasions) rather than one slot (or specific slot or specific occasion). In the case of CSI measurement/reporting configured according to Method 5, the UE may operate to accumulate/average CSI measurements measured within a configured specific period (multiple slots, symbols or CSI occasions), and may use the resultant values for the corresponding CSI reporting. For implementation of Method 5, an operation mode separate from the existing 1 slot (or 1 occasion) time limit may be added. Alternatively, the UE may reinterpret the time limit of 1 slot (or 1 occasion) under specific conditions, and may thus operate with the time limit for a specific period. In Method 5, the length of a specific period (number of slots or number of symbols) for such time limit may be semi-statically configured by higher layer signaling such as RRC. Alternatively, the length of a specific period for the time limit may be dynamically configured according to an SCS combination configured in a cell, carrier, and/or UE. If the reference numerology of Method 1 is configured, the length of the slot to be used for the time limit can be configured based on the reference numerology. When the lower bound SCS is configured in Method 2, the slot length corresponding to the reference SCS determined based on the lower bound SCS may be used to set the slot length to be used for the time limit. Meanwhile, the operation for configuring (or setting) the time limit may be turned on or off. For example, information as to whether to configure (or set) the time limit may be semi-statically enabled or disabled through higher layer signaling such as RRC. Alternatively, whether to perform such enabling or disabling may be dynamically configured through the PDCCH (DCI).

Implementation Example

FIG. 4 is a flowchart illustrating a method for transmitting and receiving signals according to the embodiments of the present disclosure.

Referring to FIG. 4, the method for transmitting and receiving signals according to the embodiments of the present disclosure may include receiving a PDCCH for triggering a CSI report (S401), receiving a CSI-RS based on the PDCCH (S403), and transmitting a PUSCH including the CSI report based on the measurement result of the CSI-RS (S405).

In the case of periodic or semi-persistent CSI reporting, step S401 may be omitted, and step S403 may be replaced with step of receiving CSI-RS.

In step S403, CSI-RS may be replaced with any one of CSI-RS, CSI-IM, and SSB (Synchronization Signal / Broadcast Block).

Step S405 may be replaced with a step of transmitting a PUCCH including a CSI report based on the measurement result for the CSI-RS.

Respective SCSs may be applied to channels and signals for each step. For example, a first SCS may be applied to PDCCH, a second SCS may be applied to CSI-RS, and a third SCS may be applied to PUSCH.

As shown in Tables 4 to 7, CSI reporting may occupy the CPU based on reception of the CSI-triggering PDCCH or reception of the CSI-RS. For example, the start time point at which the CSI reporting starts to occupy the CPU may start from a first symbol after PDCCH reception, and/or may start from a first symbol at which any one of CSI-RS, CSI-IM, and SSB is received for channel measurement. The end time point at which the CSI report ends CPU occupancy may be a specific time corresponding to the last symbol at which the PUSCH including the CSI report is transmitted, may be a time when a predetermined time corresponding to as many symbols as the number of symbols (shown in Tables 6 and 7) has elapsed from the start time of CPU occupancy, and/or may be a time when a predetermined time corresponding to as many symbols as the number of symbols (shown in Tables 6 and 7) has elapsed from the last symbol at which any one of CSI_RS, CSI-IM, and SSB is received.

In addition to the operations described with respect to FIG. 4, one or more of the operations described in Methods 1 to 5 may be additionally performed.

According to Method 1, the period in which the CPU is occupied may be determined based on a reference SCS other than the smallest SCS among the first to third SCSs. The reference SCS may be determined to be any one of the first SCS to the third SCS. Also, the reference SCS may be determined to be an arbitrary SCS regardless of the first SCS to the third SCS.

According to Method 2, when the reference SCS is determined, a lower bound may be configured (or set). For example, the reference SCS may be determined to be a higher SCS value from among the lower bound SCS value and the smallest SCS among the first SCS, the second SCS, and the third SCS.

According to Method 3, the period in which the CPU is occupied may be determined based on an offset configured in units of symbols. The offset may be configured in the form of a positive offset based on the start time of the occupancy period. In addition, the offset may be configured in the form of a negative offset based on the end point of the occupancy period. Each of the offsets may be configured in the form of increasing or decreasing the number of symbols in relation to the number of symbols Z and Z' described in Tables 4 to 7.

According to Method 4, priorities may be configured for each CSI report. During each step of FIG. 4, that is, when the second CSI report is triggered prior to transmission of a PUSCH including the CSI report after reception of PDCCH triggering the CSI report, the priority of the CSI report may be compared with the priority of the second CSI report. In this case, the CSI report having higher priority from among these two CSI reports can occupy the CPU. In this case, the priority of the CSI report may be determined according to Method 4.

According to Method 5, a time limit for CSI-RS measurement may be configured. The time limit may be set to a plurality of slots. When measurement values for plural CSI-RSs are used by the periodic CSI reporting, this time limit can be configured.

In addition to the operations described with reference to FIG. 4, one or more of the operations described through FIGS. 1 to 3 and/or the operations described in Section 1 may be further performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

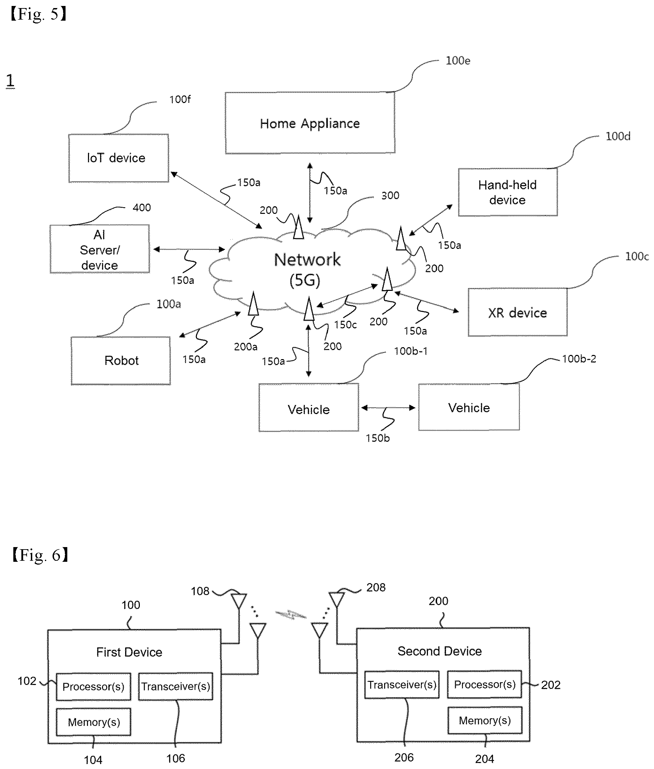

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

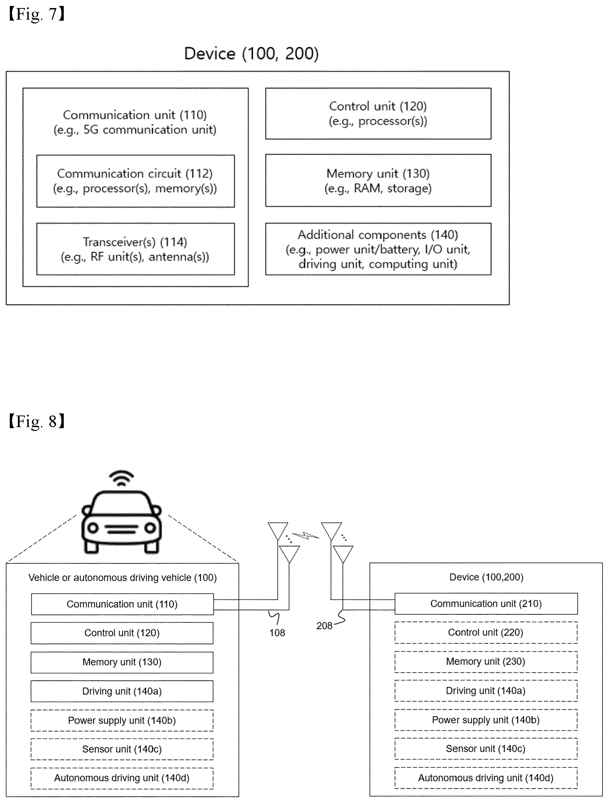

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a nonvolatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

As described above, the present disclosure is applicable to various wireless communication systems.

**Claims**

1. A method for transmitting and receiving a signal by a user equipment (UE) in a wireless communication system comprising:

   receiving a physical downlink control channel (PDCCH) for triggering a channel state information (CSI) report;
   receiving a CSI-reference signal (CSI-RS) based on the PDCCH; and
   transmitting a PUSCH including the CSI report, based on a measurement result of the CSI-RS,
   wherein

   a first subcarrier spacing (SCS) is applied to the PDCCH, a second SCS is applied to the CSI-RS, and a third SCS is applied to the PUSCH, and
   a section in which a CSI processing unit (CPU) is occupied by the CSI report is determined based on a reference SCS.

2. The method according to claim 1, wherein:
   the reference SCS is determined to be a higher SCS value from among a lower bound SCS value and the smallest SCS value among the first SCS, the second SCS and the third SCS.

3. The method according to claim 1, wherein:
   the period in which the CPU is occupied is determined based on an offset configured on a symbol basis.

4. The method according to claim 1, further comprising:

   comparing priority of the CSI report with priority of the second CSI report based on triggering of the second CSI report before transmission of the PUSCH after reception of the PDCCH;
   occupying the CPU by the second CSI report, based on a state in which priority of the second CSI report is higher than priority of the CSI report; and
   occupying the CPU by the CSI report, based on a state in which priority of the CSI report is higher than priority of the second CSI report so that the CPU is occupied by the CSI report.

5. The method according to claim 1, wherein:

   a time limit for measuring the CSI-RS is configured, wherein the time limit is configured as a plurality of slots; and
   the CSI-RS includes synchronization signal / broadcast block (SSB), CSI-interference measurement (CSI-IM), and non-zero power (NZP) CSI-RS.

6. A user equipment (UE) configured to transmit and receive a signal in a wireless communication system comprising:

   at least one transceiver;
   at least one processor; and
   at least one memory operatively connected to the at least one processor, and configured to store instructions such that the at least one processor performs specific operations by executing the instructions,
   wherein the specific operations include:

   receiving a physical downlink control channel (PDCCH) for triggering a channel state information (CSI) report;
   based on a second subcarrier spacing (SCS), receiving a CSI-reference signal (CSI-RS) based on the PDCCH; and
   based on a measurement result of the CSI-RS, transmitting a PUSCH including the CSI report,
   wherein

a first subcarrier spacing (SCS) is applied to the PDCCH, a second SCS is applied to the CSI-RS, and a third SCS is applied to the PUSCH, and

a section in which a CSI processing unit (CPU) is occupied by the CSI report is determined based on a reference SCS.

7. The user equipment (UE) according to claim 6, wherein:
the reference SCS is determined to be a higher SCS value from among a lower bound SCS value and the smallest SCS value among the first SCS, the second SCS and the third SCS.

8. The user equipment (UE) according to claim 6, wherein:
the period in which the CPU is occupied is determined based on an offset configured on a symbol basis.

9. The user equipment (UE) according to claim 6, wherein the specific operations further include:

comparing priority of the CSI report with priority of the second CSI report based on triggering of the second CSI report before transmission of the PUSCH after reception of the PDCCH;
occupying the CPU by the second CSI report, based on a state in which priority of the second CSI report is higher than priority of the CSI report; and
occupying the CPU by the CSI report, based on a state in which priority of the CSI report is higher than priority of the second CSI report so that the CPU is occupied by the CSI report.

10. The user equipment (UE) according to claim 6, wherein:

a time limit for measuring the CSI-RS is configured, wherein the time limit is configured as a plurality of slots; and
the CSI-RS includes synchronization signal / broadcast block (SSB), CSI-interference measurement (CSI-IM), and non-zero power (NZP) CSI-RS.

11. A device for a user equipment (UE) comprising:

at least one processor; and
at least one computer memory operatively connected to the at least one processor, and configured to store instructions such that the at least one processor performs specific operations by executing the instructions, wherein the specific operations include:

receiving a physical downlink control channel (PDCCH) for triggering a channel state information (CSI) report;
based on a second subcarrier spacing (SCS), receiving a CSI-reference signal (CSI-RS) based on the PDCCH; and
based on a measurement result of the CSI-RS, transmitting a PUSCH including the CSI report, wherein

a first subcarrier spacing (SCS) is applied to the PDCCH, a second SCS is applied to the CSI-RS, and a third SCS is applied to the PUSCH, and
a section in which a CSI processing unit (CPU) is occupied by the CSI report is determined based on a reference SCS.

12. The device according to claim 11, wherein:
the reference SCS is determined to be a higher SCS value from among a lower bound SCS value and the smallest SCS value among the first SCS, the second SCS and the third SCS.

13. The device according to claim 11, wherein:
the period in which the CPU is occupied is determined based on an offset configured on a symbol basis.

14. The device according to claim 11, wherein the specific operations further include:

comparing priority of the CSI report with priority of the second CSI report based on triggering of the second CSI report before transmission of the PUSCH after reception of the PDCCH;
occupying the CPU by the second CSI report, based on a state in which priority of the second CSI report is higher than priority of the CSI report; and

occupying the CPU by the CSI report, based on a state in which priority of the CSI report is higher than priority of the second CSI report so that the CPU is occupied by the CSI report.

15. The device according to claim 11, wherein:

a time limit for measuring the CSI-RS is configured, wherein the time limit is configured as a plurality of slots; and the CSI-RS includes synchronization signal / broadcast block (SSB), CSI-interference measurement (CSI-IM), and non-zero power (NZP) CSI-RS.

16. A computer-readable storage medium configured to store at least one computer program for allowing at least one processor to perform operations, the computer-readable storage medium comprising:
performing the operations:
wherein the operations include:

receiving a physical downlink control channel (PDCCH) for triggering a channel state information (CSI) report; based on a second subcarrier spacing (SCS), receiving a CSI-reference signal (CSI-RS) based on the PDCCH; and

based on a measurement result of the CSI-RS, transmitting a PUSCH including the CSI report,
wherein

a first subcarrier spacing (SCS) is applied to the PDCCH, a second SCS is applied to the CSI-RS, and a third SCS is applied to the PUSCH, and

a section in which a CSI processing unit (CPU) is occupied by the CSI report is determined based on a reference SCS.

17. The storage medium according to claim 16, wherein:
the reference SCS is determined to be a higher SCS value from among a lower bound SCS value and the smallest SCS value from among the first SCS, the second SCS and the third SCS.

18. The storage medium according to claim 16, wherein:
the period in which the CPU is occupied is determined based on an offset configured on a symbol basis.

19. The storage medium according to claim 16, wherein the specific operations further include:

comparing priority of the CSI report with priority of the second CSI report based on triggering of the second CSI report before transmission of the PUSCH after reception of the PDCCH;

occupying the CPU by the second CSI report, based on a state in which priority of the second CSI report is higher than priority of the CSI report; and

occupying the CPU by the CSI report, based on a state in which priority of the CSI report is higher than priority of the second CSI report so that the CPU is occupied by the CSI report.

20. The storage medium according to claim 16, wherein:

a time limit for measuring the CSI-RS is configured, wherein the time limit is configured as a plurality of slots; and the CSI-RS includes synchronization signal / broadcast block (SSB), CSI-interference measurement (CSI-IM), and non-zero power (NZP) CSI-RS.

【Fig. 1】

【Fig. 2】

【Fig. 3】

【Fig. 4】

receiving a PDCCH for triggering CSI report —S401

receiving a CSI-RS based on the PDCCH —S403

based on a measurement result for the CSI-RS, transmitting a PUSCH including the CSI report —S405

【Fig. 5】

【Fig. 6】

【Fig. 7】

Device (100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

【Fig. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108        208

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
|---|
| **PCT/KR2021/010436** |

**A. CLASSIFICATION OF SUBJECT MATTER**

**H04B 7/06**(2006.01)i; **H04L 5/00**(2006.01)i; **H04L 27/26**(2006.01)i; **H04B 17/309**(2014.01)i; **H04W 24/10**(2009.01)i

According to International Patent Classification (IPC) or to both national classification and IPC

**B. FIELDS SEARCHED**

Minimum documentation searched (classification system followed by classification symbols)

H04B 7/06(2006.01); H04L 5/00(2006.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(Channel State Information), 보고(report), SCS(Subcarrier Spacing), CPU(CSI Processing Unit), 참조 SCS(reference SCS)

**C. DOCUMENTS CONSIDERED TO BE RELEVANT**

| Category* | Citation of document, with indication, where appropriate, of the relevant passages | Relevant to claim No. |
|---|---|---|
| A | US 2020-0196179 A1 (LG ELECTRONICS INC.) 18 June 2020 (2020-06-18) <br> See paragraphs [0192]-[0338]; and figure 11. | 1-20 |
| A | CHARTER COMMUNICATIONS. Outcome of email thread [100e-NR-unlic-NRU-InitAccessProc-03]. R1-2001317, 3GPP TSG RAN WG1 Meeting #100-e. 06 March 2020. <br> See section 2. | 1-20 |
| A | NOKIA et al. Clarification on the number of occupied CPUs and delay requirements for CSI reports using PUSCH. R1-2002291, 3GPP TSG RAN WG1 Meeting #100bis. e-Meeting. 10 April 2020. <br> See sections 5.2.1.6 and 5.4. | 1-20 |
| A | LENOVO et al. Discussion on potential physical layer impacts for NR beyond 52.6 GHz. R1-2003304, 3GPP TSG RAN WG1 Meeting #101-e. e-Meeting. 15 May 2020. <br> See sections 4.1-4.2. | 1-20 |
| A | US 2019-0349180 A1 (ASUSTEK COMPUTER INC.) 14 November 2019 (2019-11-14) <br> See paragraphs [0346]-[0402]; and figures 6-17. | 1-20 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 December 2021** | **06 December 2021** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/010436**

| Patent document cited in search report | | | Publication date (day/month/year) | Patent family member(s) | | | Publication date (day/month/year) |
|---|---|---|---|---|---|---|---|
| US | 2020-0196179 | A1 | 18 June 2020 | CN | 111165010 | A | 15 May 2020 |
| | | | | EP | 3664503 | A1 | 10 June 2020 |
| | | | | JP | 2020-537415 | A | 17 December 2020 |
| | | | | KR | 10-2020-0021902 | A | 02 March 2020 |
| | | | | KR | 10-2020-0096469 | A | 12 August 2020 |
| | | | | KR | 10-2143536 | B1 | 12 August 2020 |
| | | | | KR | 10-2224909 | B1 | 09 March 2021 |
| | | | | US | 10785669 | B2 | 22 September 2020 |
| | | | | US | 10834624 | B2 | 10 November 2020 |
| | | | | US | 2020-0296613 | A1 | 17 September 2020 |
| | | | | US | 2021-0022030 | A1 | 21 January 2021 |
| | | | | WO | 2020-040539 | A1 | 27 February 2020 |
| US | 2019-0349180 | A1 | 14 November 2019 | CN | 110474755 | A | 19 November 2019 |
| | | | | EP | 3567789 | A1 | 13 November 2019 |
| | | | | EP | 3567789 | B1 | 25 November 2020 |
| | | | | US | 10951383 | B2 | 16 March 2021 |

Form PCT/ISA/210 (patent family annex) (July 2019)